# EUROPÄISCHE PATENTSCHRIFT

(11) **EP 3 649 418 B1**
(45) Veröffentlichungstag und Bekanntmachung des Hinweises auf die Patenterteilung: **31.03.2021**
(21) Anmeldenummer: 18733909.8
(22) Anmeldetag: 03.07.2018
(51) Int. Cl.: F27B 3/28, F27D 19/00, F27D 21/00, G01N 1/12, G01K 13/12

(54) **FÜHREN EINER SONDE**
GUIDING A PROBE
GUIDAGE D'UNE SONDE

(30) Priorität: 04.07.2017 EP 17179451
(43) Veröffentlichungstag der Anmeldung: 13.05.2020
(73) Patentinhaber: Primetals Technologies Austria GmbH, 4031 Linz (AT)
(72) Erfinder: SCHEIDEGGER, Roger, 4300 St. Valentin (AT); KEPLINGER, Thomas, 4191 Vorderweißenbach (AT); PRIESNER, Andreas, 4020 Linz (AT)
(74) Vertreter: Metals@Linz
(86) Internationale Anmeldenummer: PCT/EP2018/067958
(87) Internationale Veröffentlichungsnummer: WO 2019/007963

(56) Entgegenhaltungen:
- EP-A1- 2 482 019
- DE-A1- 4 034 809
- JP-A- H06 294 791

## Beschreibung

Die Erfindung betrifft eine Sondenführung zum Führen einer Sonde sowie einen Industrieroboter und ein Verfahren zum automatisierten Einführen einer Sonde in ein metallurgisches Gefäß und Ausführen der Sonde aus dem metallurgischen Gefäß.

Bei der Herstellung von Stahl werden häufig aus einem metallurgischen Gefäß, das Flüssigstahl enthält, metallurgische Proben des Flüssigstahls entnommen. In Stahlwerken, die aus Platz- oder Kostengründen nicht über eine Probenentnahmevorrichtung verfügen, wird zur Probenentnahme eine Sonde in das metallurgische Gefäß eingeführt. Sonden werden ferner zur Messung einer Temperatur des Flüssigstahls in ein metallurgisches Gefäß eingeführt. Die Sonden werden beispielsweise an einer Sondenlanze manuell oder halbautomatisch in das metallurgische Gefäß eingeführt. Ein derartiges Bedienen einer Sondenlanze unter Mithilfe von menschlichen Bedienern stellt für die Bediener jedoch ein hohes Sicherheitsrisiko dar. So kann es beispielsweise zu Verpuffungen kommen, wenn dem Stahlbad Schrott beigegeben wurde, der Wassereinschlüsse enthält.

WO 2007/057061 A1 offenbart eine Stranggießanlage mit mindestens einem Multifunktions-Roboter zur Durchführung von mehreren unterschiedlichen prozessgesteuerten oder automatisierten Eingriffen an der Stranggießanlage.

EP 2 490 000 A1 offenbart ein Verfahren zum Einstecken eines mittels einer Halte- und Bewegungsvorrichtung in einem Haltebereich gehaltenen Kontaktstabes in eine hüttentechnische Sonde. Die Halte- und Bewegungsvorrichtung kann beispielsweise als ein Roboterarm ausgebildet sein.

DE 40 34 809 A1 offenbart eine Vorrichtung in Form einer Art Roboter zur Manipulation von Sauerstoff- und/oder Kohlelanzen, insbesondere beim Schmelzprozess in einem elektrischen Lichtbogenofen. Die Vorrichtung verfügt über einen in der Höhe verstellbaren Turm, an dem Kragarme mit Lanzenhaltern und den Lanzen schwenkbar angeordnet sind. Der Turm ist zusätzlich drehbar auf einem Fahrgestell angeordnet, so dass er in die jeweils optimale Lage gebracht werden kann. Der Kragarm kann im Anstellwinkel den jeweiligen Gegebenheiten entsprechend verstellt werden.

JP H06 294791 A offenbart eine automatische Vorrichtung zum Einsetzen und Entfernen einer Sonde für eine Lanze. Die Vorrichtung umfasst eine Lagereinrichtung zur Lagerung einer Vielzahl von Sonden, Sondenentnahmemechanismen, einen Übertragungsmechanismus, Sondenanbringmechanismen und einen Klammermechanismus. Die Sondenentnahmemechanismen entnehmen die Sonden einzeln aus der Lagereinrichtung. Der Übertragungsmechanismus empfängt die entnommene Sonde und überträgt sie zu einer vorgeschriebenen Position. Die an die vorgeschriebene Position übertragene Sonde wird an dem Vorderende der Lanze durch die Sondenanbringmechanismen angebracht. Der Klammermechanismus löst die Sonde vom Vorderende der Lanze.

EP 2 482 019 A1 zeigt einen Brennlanzenhalter zur Handhabung einer Brennlanze durch einen Industrieroboter, wobei der Brennlanzenhalter eine Kuppeleinrichtung zum automatischen Ankuppeln an den Roboter, eine Spanneinrichtung mit einem Aktuator zum automatischen Verbinden und Lösen einer Brennlanze mit bzw. von dem Brennlanzenhalter und eine Sauerstoffeinführung zum Einführen von Sauerstoff in die Brennlanze aufweist. Die Brennlanze wird vom Roboter aus einem Magazin aufgenommen und zu einem metallurgischen Gefäß verfahren, wobei unter Zufuhr von Sauerstoff in die Brennlanze eine Ausflussöffnung des metallurgischen Gefäßes freigebrannt wird.

Der Erfindung liegt die Aufgabe zugrunde, eine verbesserte Vorrichtung zum Führen einer Sonde, insbesondere zum automatisierten Einführen einer Sonde in ein metallurgisches Gefäß und Ausführen der Sonde aus dem metallurgischen Gefäß, sowie ein verbessertes Verfahren zum Einführen einer Sonde in ein metallurgisches Gefäß und Ausführen der Sonde aus dem metallurgischen Gefäß anzugeben.

Die Aufgabe wird erfindungsgemäß hinsichtlich der Vorrichtung durch eine Sondenführung mit den Merkmalen des Anspruchs 1 und durch einen Industrieroboter mit den Merkmalen des Anspruchs 9 und hinsichtlich des Verfahrens durch die Merkmale des Anspruchs 11 gelöst.

Vorteilhafte Ausgestaltungen der Erfindung sind Gegenstand der Unteransprüche.

Eine erfindungsgemäße Sondenführung zum Führen einer Sonde umfasst eine Sondenlanze mit einem Sondenhalter für die Sonde und eine Verfahreinheit zum Verfahren der Sondenlanze, wobei die Verfahreinheit eine mit einem Roboterarm eines Industrieroboters verbindbare Schnittstelle aufweist.

Die erfindungsgemäße Sondenführung ist besonders zum automatisierten Einführen einer Sonde in ein metallurgisches Gefäß und Ausführen der Sonde aus dem metallurgischen Gefäß mittels eines Industrieroboters geeignet. Dazu weist die Sondenführung eine mit einem Roboterarm eines Industrieroboters verbindbare Schnittstelle auf. Der Sondenhalter der Sondenlanze ermöglicht die Aufnahme einer Sonde durch die Sondenführung. Die Verfahreinheit ermöglicht, eine Sonde an der Sondenlanze in das metallurgische Gefäß einzuführen und aus dem Gefäß herauszuführen. Dies ermöglicht das Ein- und Ausführen der Sonde mittels eines herkömmlichen 6-achsigen Gelenkarmroboters, dessen Aktionsradius auf maximal etwa drei Meter eingeschränkt ist, da er ausschließlich über Drehachsen, jedoch keinen Linearantrieb verfügt und seine mögliche Kinematik daher in einer Kombination von reinen Drehbewegungen besteht. Dieser Aktionsradius ist zum Einführen der Sonde durch die Bewegung der Sondenlanze allein über die Bewegung des Roboterarms in der Regel nicht ausreichend. Daher sieht die Erfindung eine Verfahreinheit vor, mit der die Sondenlanze zusätzlich verfahren werden kann. Gegenüber einer Linearbewegung des gesamten Roboters ist das Verfahren der Sondenlanze mittels der Verfahreinheit deutlich kostengünstiger, da ein Industrieroboter typisch bis zu mehrere Tonnen wiegen kann und daher nur mit entsprechend hohem Aufwand linear bewegbar ist. Überdies hätte das Verfahren des gesamten Roboters beispielsweise auf Bodenschienen den Nachteil, dass die dazu erforderlichen Bodenschienen ein Hindernis in dem Bereich des metallurgischen Gefäßes darstellen würden. Zudem wird eine ortsfeste Anordnung des Roboters gegenüber einer verfahrbaren Anordnung bevorzugt, da auch Raum für anderweitige Tätigkeiten in dem Bereich des metallurgischen Gefäßes benötigt wird. Ein weiterer Vorteil des automatisierten Ein- und Ausführens einer Sonde mit einem Roboter besteht darin, dass dem Roboter in einfacher Weise die Höhe des Flüssigkeitsspiegels in dem metallurgischen Gefäß von einer Anlagenautomation übermittelt werden kann und daher von dem Roboter im Unterschied zu einem menschlichen Bediener eine geforderte Eintauchtiefe der Sonde von beispielsweise etwa 60 cm unter dem Flüssigkeitsspiegel zuverlässig reproduziert werden kann.

Eine Ausgestaltung der Erfindung sieht vor, dass die Sondenlanze einen geraden Verfahrabschnitt aufweist, und dass die Verfahreinheit eine Antriebseinheit zum Verschieben des Verfahrabschnitts relativ zu der Verfahreinheit entlang einer Längsachse des Verfahrabschnitts aufweist. Beispielsweise weist die Verfahreinheit eine Halterung auf, in der der Verfahrabschnitt geführt ist. Die Antriebseinheit weist beispielsweise einen Antrieb zum Verschieben des Verfahrabschnitts auf. Ferner kann die Antriebseinheit einen Mechanismus zur Umwandlung einer rotatorischen Bewegung des Antriebs in eine translatorische Bewegung des Verfahrabschnitts aufweisen. Dieser Mechanismus ist beispielsweise ein Getriebe wie ein Zahnrad und eine Zahnstange. Diese Ausgestaltungen der Erfindung ermöglichen eine besonders einfache und kostengünstige Realisierung der Verfahreinheit durch eine Antriebseinheit.

Eine alternative Ausgestaltung der Erfindung sieht vor, dass die Verfahreinheit einen Teleskoparm aufweist, an dem die Sondenlanze angeordnet ist. Gegenüber einer Verfahreinheit mit einer Antriebseinheit zum Verfahren des Verfahrabschnitts der Sondenlanze ist eine Verfahreinheit mit einem Teleskoparm zwar kostenaufwändiger, dafür jedoch platzsparender, da die Sondenlanze keinen Verfahrabschnitt aufweisen muss, der in der Regel mehrere Meter lang ist. Eine Verfahreinheit mit einem Teleskoparm ist daher vorteilhaft, wenn die Länge der Sondenlanze aus Platzgründen beschränkt werden soll. Üblicherweise steht jedoch in dem Bereich des metallurgischen Gefäßes ausreichend Platz zur Verfügung, so dass eine Verfahreinheit mit einer Antriebseinheit für einen Verfahrabschnitt der Sondenlanze gegenüber einer Verfahreinheit mit einem Teleskoparm bevorzugt ist.

Eine weitere Ausgestaltung der Erfindung sieht vor, dass die Sonde vollautomatisch oder halbautomatisch auf den Sondenhalter aufgesteckt wird. Die Sonde weist beispielsweise ein Kartonrohr auf, an dem ein Probenentnahmekörper zur Entnahme einer Probe aus dem metallurgischen Gefäß und/oder eine Sensorik zur Durchführung einer Messung in dem metallurgischen Gefäß angeordnet ist.

Die Erfindung sieht ferner vor, dass die Sondenlanze eine an einem Sondenhalterende des Sondenhalters angeordnete Kontakteinheit mit elektrischen Kontakten zum Kontaktieren einer Sensorik der Sonde aufweist, und dass durch die Sondenlanze elektrische Signalleitungen zu den elektrischen Kontakten der Kontakteinheit geführt sind. Dies ermöglicht, eine Sensorik einer Sonde direkt über die Kontakteinheit und die elektrische Signalleitungen der Sondenlanze sowie über die Schnittstelle der Verfahreinheit mit dem Industrieroboter zu verbinden, so dass von der Sonde erfasste Messsignale direkt von dem Industrieroboter gespeichert oder an ein übergeordnetes Anlagensystem weitergeleitet werden können.

Eine weitere Ausgestaltung der Erfindung sieht vor, dass die Kontakteinheit lösbar mit dem Sondenhalterende verbunden ist. Dies ermöglicht, die Kontakteinheit, beispielsweise bei einem Defekt, auszuwechseln.

Eine weitere Ausgestaltung der Erfindung sieht vor, dass der Sondenhalter lösbar mit einem Mittelabschnitt der Sondenlanze verbunden ist. Dabei kann der Mittelabschnitt lösbar mit dem Verfahrabschnitt der Sondenlanze verbunden sein. Dies ermöglicht, den Sondenhalter und/oder den Mittelabschnitt, beispielsweise bei einem Defekt, auszuwechseln.

Eine weitere Ausgestaltung der Erfindung sieht vor, dass die Schnittstelle zur Befestigung an einem Flansch des Roboterarms ausgebildet ist. Dadurch kann die Sondenführung mittels der Schnittstelle der Verfahreinheit vorteilhaft durch eine Standardbefestigung mit dem Roboterarm verbunden werden.

Ein erfindungsgemäßer Industrieroboter zum automatisierten Einführen einer Sonde in ein metallurgisches Gefäß und Ausführen der Sonde aus dem metallurgischen Gefäß umfasst einen bewegbaren Roboterarm und eine erfindungsgemäße Sondenführung, wobei die Schnittstelle der Verfahreinheit der Sondenführung mit dem Roboterarm verbunden ist. Dabei ist die Verfahreinheit der Sondenführung vorzugsweise durch den Industrieroboter ansteuerbar. Ein derartiger Industrieroboter ermöglicht das automatisierte Einführen einer Sonde in ein metallurgisches Gefäß und Ausführen der Sonde aus dem metallurgischen Gefäß mit den oben bereits genannten Vorteilen.

Bei dem erfindungsgemäßen Verfahren wird eine Sonde mit einem erfindungsgemäßen Industrieroboter automatisiert in ein metallurgisches Gefäß eingeführt und aus dem metallurgischen Gefäß herausgeführt, wobei die Sondenlanze von dem Industrieroboter zu der Sonde bewegt wird, der Sondenhalter mit der Sonde verbunden wird, die Sondenlanze mit der Sonde von dem Industrieroboter zu dem metallurgischen Gefäß bewegt wird, die Sonde an der Sondenlanze von dem Industrieroboter in das metallurgische Gefäß eingeführt wird und die Sonde an der Sondenlanze von dem Industrieroboter aus dem metallurgischen Gefäß herausgeführt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine perspektivische Darstellung einer Sondenführung,
FIG 2 eine Seitenansicht der in Figur 1 gezeigten Sondenführung,
FIG 3 eine Unteransicht der in Figur 1 gezeigten Sondenführung,
FIG 4 eine Rückansicht der in Figur 1 gezeigten Sondenführung,
FIG 5 eine perspektivische Darstellung eines Industrieroboters beim Aufnehmen einer Sonde aus einem Sondenmagazin,
FIG 6 eine perspektivische Darstellung des in Figur 5 gezeigten Industrieroboters beim Zuführen der Sonde zu einem metallurgischen Gefäß,
FIG 7 eine perspektivische Draufsicht des in Figur 5 gezeigten Industrieroboters beim Einführen der Sonde in das metallurgische Gefäß.

Einander entsprechende Teile sind in den Figuren mit denselben Bezugszeichen versehen.

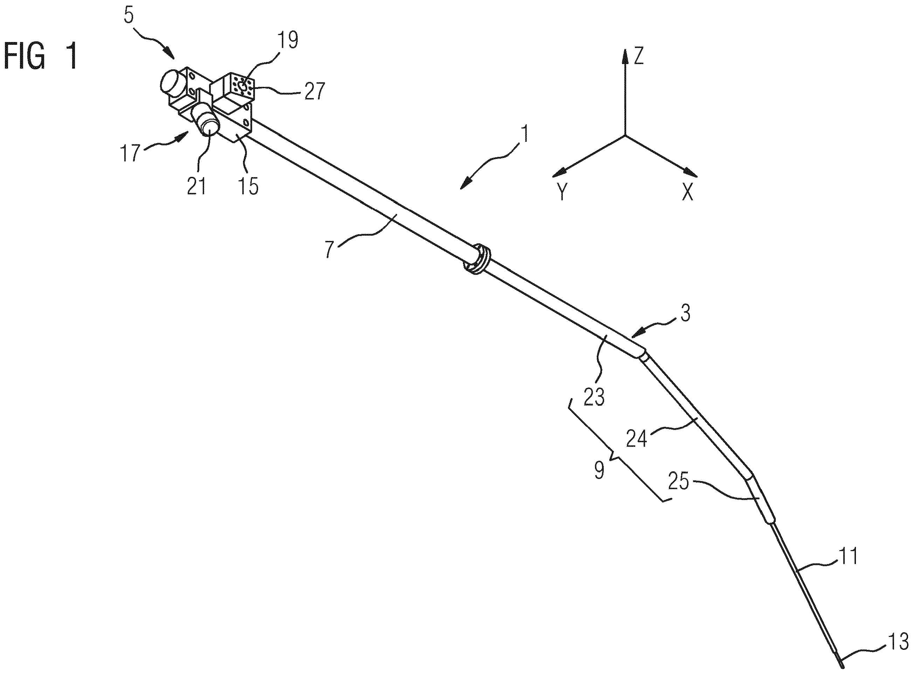

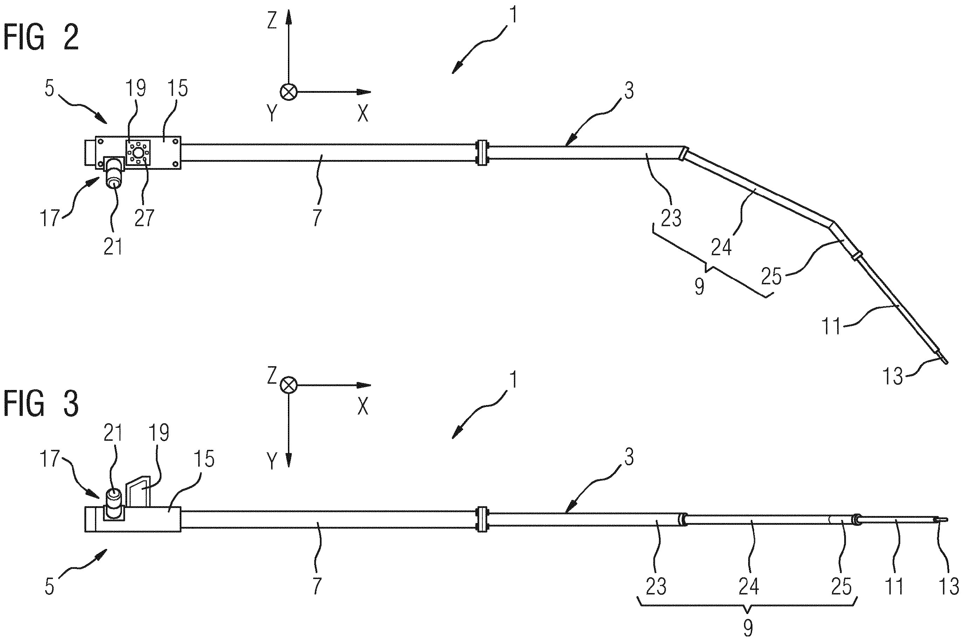

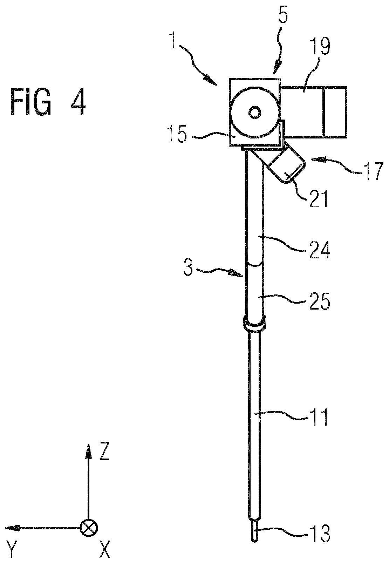

Die Figuren 1 bis 4 zeigen verschiedene Darstellungen einer Sondenführung 1 zum Führen einer Sonde 2. Figur 1 zeigt eine perspektivische Darstellung der Sondenführung 1, Figur 2 zeigt eine Seitenansicht der Sondenführung 1, Figur 3 zeigt eine Unteransicht der Sondenführung 1 und Figur 4 zeigt eine Rückansicht der Sondenführung 1.

Die Sondenführung 1 weist eine Sondenlanze 3 und eine Verfahreinheit 5 zum Verfahren der Sondenlanze 3 auf.

Die Sondenlanze 3 umfasst einen Verfahrabschnitt 7, einen Mittelabschnitt 9, einen Sondenhalter 11 und eine Kontakteinheit 13.

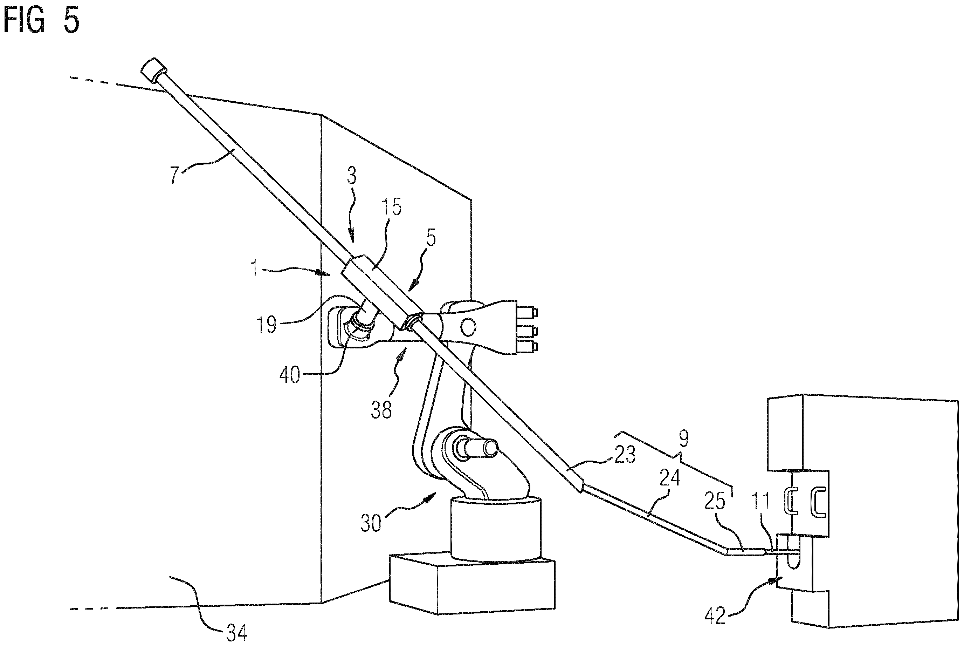

Die Verfahreinheit 5 umfasst eine Halterung 15, eine Antriebseinheit 17 und eine Schnittstelle 19, die mit einem Roboterarm 38 eines Industrieroboters 30 verbindbar ist (siehe dazu die Figuren 5 bis 7).

Der Verfahrabschnitt 7 der Sondenlanze 3 ist als ein gerades Rohr ausgebildet, das in der Halterung 15 der Verfahreinheit 5 geführt ist und durch die Antriebseinheit 17 der Verfahreinheit 5 relativ zu der Halterung 15 entlang einer Längsachse des Verfahrabschnitts 7 linear bewegbar ist.

Beispielsweise weist die Antriebseinheit 17 einen an der Halterung 15 angeordneten Antrieb 21 auf, der den Verfahrabschnitt 7 über einen Mechanismus zur Umwandlung einer rotatorischen Bewegung des Antriebs 21 in eine translatorische Bewegung antreibt. Der Antrieb 21 ist beispielsweise als ein Elektromotor ausgeführt. Der Mechanismus zur Umwandlung einer rotatorischen Bewegung des Antriebs 21 in eine translatorische Bewegung des Verfahrabschnitts 7 ist beispielsweise als ein Getriebe ausgebildet, wobei das Getriebe beispielsweise ein Zahnrad und eine Zahnstange, die an dem Verfahrabschnitt 7 angeordnet beziehungsweise Teil des Verfahrabschnitts 7 ist, aufweist.

Der Mittelabschnitt 9 der Sondenlanze 3 schließt sich an den Verfahrabschnitt 7 an und weist mehrere (im dargestellten Ausführungsbeispiel drei) rohrartige gerade Unterabschnitte 23 bis 25 auf, die voneinander abgewinkelt sind. Der Mittelabschnitt 9 ist mit dem Verfahrabschnitt 7 beispielsweise über eine Schraubverbindung lösbar verbunden.

Der Sondenhalter 11 der Sondenlanze 3 schließt sich an den Mittelabschnitt 9 an und ist mit diesem beispielsweise über eine Schraubverbindung lösbar verbunden, so dass der Sondenhalter 11 auswechselbar ist. Der Sondenhalter 11 ist als ein gerades Rohr ausgebildet.

Die Kontakteinheit 13 schließt sich an den Sondenhalter 11 an und bildet ein Lanzenende der Sondenlanze 3. Beispielsweise ist die Kontakteinheit 13 mit einem Sondenhalterende des Sondenhalters 11 über eine Schraubverbindung lösbar verbunden, so dass die Kontakteinheit 13 auswechselbar ist. Die Kontakteinheit 13 weist elektrische Kontakte zum Kontaktieren einer Sensorik einer Sonde 2 auf. Durch die Sondenlanze 3 sind elektrische Signalleitungen zu den elektrischen Kontakten der Kontakteinheit 13 geführt.

Die Schnittstelle 19 der Verfahreinheit 5 steht seitlich von der Halterung 15 ab und ist zur Befestigung an einem Flansch 40 des Roboterarms 38 ausgebildet (siehe dazu die Figuren 5 bis 7). Dazu weist ein von der Halterung 15 abgewandtes Ende der Schnittstelle 19 mehrere Bohrungen 27 mit jeweils einem Innengewinde zur Befestigung an dem Flansch 40 mittels Schraubverbindungen auf. Über die Schnittstelle 19 sind ferner die Antriebseinheit 17 und die elektrischen Kontakte der Kontakteinheit 13 elektrisch mit dem Industrieroboter 30 verbindbar, so dass die Antriebseinheit 17 von dem Industrieroboter 30 ansteuerbar ist und dem Industrieroboter 30 die von der Kontakteinheit 13 empfangenen elektrischen Signale zuführbar sind. Die Schnittstelle 19 dient also der mechanischen und elektrischen Verbindung der Sondenführung 1 mit dem Industrieroboter 30.

Die Sondenlanze 3 hat eine Länge von mehreren Metern. Beispielsweise ist der Verfahrabschnitt 7 etwa 3 m lang, ein erster Unterabschnitt 23 des Mittelabschnitts 9 ist beispielsweise etwa 2 m lang, ein zweiter Unterabschnitt 24 des Mittelabschnitts 9 ist beispielsweise etwa 1,5 m lang, ein dritter Unterabschnitt 25 des Mittelabschnitts 9 ist beispielsweise etwa 0,5 m lang und der Sondenhalter 11 ist beispielsweise etwa 1 m lang.

Die Figuren 5 bis 7 zeigen einen Industrieroboter 30 mit einer wie in den Figuren 1 bis 4 ausgeführten Sondenführung 1 in verschiedenen Phasen des Zuführens einer Sonde 2 zu einem metallurgischen Gefäß 32, in dem sich Flüssigstahl befindet. Das metallurgische Gefäß 32 ist beispielsweise ein herkömmlicher Stahlkonverter oder ein Lichtbogenofen. In dem in den Figuren 5 bis 7 gezeigten Ausführungsbeispiel befindet sich vor dem metallurgischen Gefäß 32 eine Schutzmauer 34, die eine relativ enge Maueröffnung 36 mit Abmessungen von beispielsweise etwa 50 cm x 100 cm zur Durchführung von Sonden 2 zu dem metallurgischen Gefäß 32 aufweist.

Der Industrieroboter 30 ist als ein herkömmlicher 6-achsiger Gelenkarmroboter mit einem bewegbaren Roboterarm 38 ausgebildet. Die Schnittstelle 19 der Verfahreinheit 5 der Sondenführung 1 ist mit dem Roboterarm 38 verbunden, wobei die Schnittstelle 19 durch Schraubverbindungen an einem Flansch 40 des Roboterarms 38 befestigt ist. Ferner sind die Antriebseinheit 17 und die elektrischen Kontakte der Kontakteinheit 13 der Sondenführung 1 über die Schnittstelle 19 elektrisch mit dem Industrieroboter 30 verbunden, so dass die Antriebseinheit 17 von dem Industrieroboter 30 ansteuerbar ist und dem Industrieroboter 30 die von der Kontakteinheit 13 empfangenen elektrischen Signale zugeführt werden.

Mit dem Industrieroboter 30 wird die Sondenlanze 3 zunächst zu einem Sondenmagazin 42 bewegt, das zur Lagerung von Sonden 2 ausgebildet ist. Danach wird der Sondenhalter 11 entweder vollautomatisch oder manuell mit einer Sonde 2 verbunden.

Jede Sonde 2 weist eine Öffnung auf, in die die Kontakteinheit 13 und der Sondenhalter 11 eingefahren und dabei mit der Sonde 2 verbunden werden können. Die Sonden 2 sind beispielsweise jeweils zur Entnahme einer Probe von Flüssigstahl aus dem metallurgischen Gefäß 32 und/oder zur Durchführung einer Messung, beispielsweise der Messung einer Temperatur des Flüssigstahls, ausgebildet. Sonden 2 zur Durchführung einer Messung weisen eine entsprechende Sensorik auf, die beim Einfahren der Kontakteinheit 13 in die Sonde 2 elektrisch mit den elektrischen Kontakten der Kontakteinheit 13 verbunden wird.

Bei einer vollautomatischen Verbindung des Sondenhalters 11 mit einer Sonde 2 führt der Industrieroboter 30 den Sondenhalter 11 in das Sondenmagazin 42 ein und verbindet den Sondenhalter 11 mit einer Sonde 2, indem er die Kontakteinheit 13 und den Sondenhalter 11 in die Sonde 2 einfährt. Dabei erkennt der Industrieroboter 30, beispielsweise mit einem Bilderkennungssystem, belegte und leere Sondenplätze des Sondenmagazins 42 selbsttätig und wählt einen belegten Sondenplatz aus.

Figur 5 zeigt den Industrieroboter 30 beim Einführen des Sondenhalters 11 in das Sondenmagazin 42.

Anschließend wird die Sondenlanze 3 mit der Sonde 2 von dem Industrieroboter 30 zu dem metallurgischen Gefäß 32 hin bewegt und die Sonde 2 und der vordere Teil der Sondenlanze 3 werden von dem Industrieroboter 30 durch die Maueröffnung 36 in der Schutzmauer 34 zu dem metallurgischen Gefäß 32 geführt.

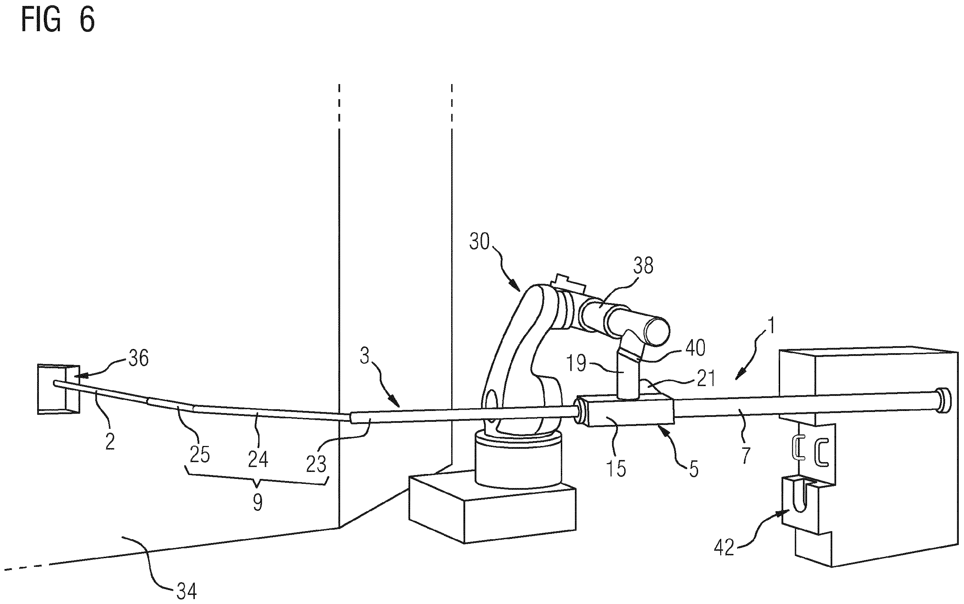

Figur 6 zeigt den Industrieroboter 30 beim Durchführen der Sonde 2 durch die Maueröffnung 36 in der Schutzmauer 34.

Danach wird der Verfahrabschnitt 7 der Sondenlanze 3 mittels der Verfahreinheit 5 der Sondenführung 1 zu dem metallurgischen Gefäß 32 hin verfahren bis die Sonde 2 eine vorgegebene Eintauchtiefe, beispielsweise eine Eintauchtiefe von etwa 60 cm, in dem Flüssigstahl erreicht, wobei die Verfahreinheit 5 von dem Industrieroboter 30 gesteuert wird.

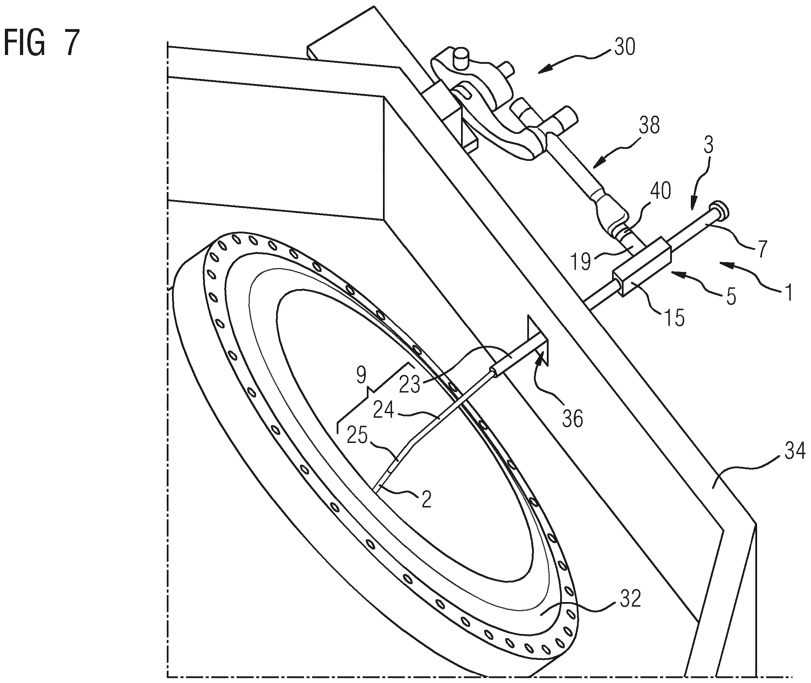

Figur 7 zeigt den Industrieroboter 30 beim Einführen der Sonde 2 in das metallurgische Gefäß 32.

Anschließend wird mittels der Sonde 2 eine Probe des Flüssigstahls entnommen und/oder eine Messung durchgeführt. Zum Entnehmen einer Probe wird die Sonde 2 beispielsweise eine vorgegebene Zeitdauer in der Eintauchtiefe in dem Flüssigstahl gehalten bis die Probe entnommen ist. Die Probenentnahme geschieht beispielsweise durch das Durchbrennen einer Kartonummantelung um einen Probenentnahmekörper der Sonde 2 in dem Flüssigstahl. Bei der Durchführung einer Messung werden die von der Sonde 2 aufgenommenen Messdaten über die Kontakteinheit 13, die durch die Sondenlanze 3 geführten elektrischen Signalleitungen und die Schnittstelle 19 der Sondenführung 1 dem Industrieroboter 30 zugeführt und von diesem gespeichert und/oder an ein übergeordnetes Anlagensystem weitergeleitet.

Danach wird die Sonde 2 an der Sondenlanze 3 aus dem metallurgischen Gefäß 32 herausgeführt, indem der Verfahrabschnitt 7 der Sondenlanze 3 mittels der Verfahreinheit 5 der Sondenführung 1 von dem metallurgischen Gefäß 32 weg verfahren wird, wobei die Verfahreinheit 5 von dem Industrieroboter 30 gesteuert wird. Abschließend werden die Sonde 2 und der vordere Teil der Sondenlanze 3 von dem Industrieroboter 30 durch die Maueröffnung 36 in der Schutzmauer 34 hindurchgezogen und die Sonde 2 wird auf einen freien Ablageplatz eines (nicht dargestellten) Ablagemagazins abgelegt, wobei der Industrieroboter 30 den freien Ablageplatz beispielsweise selbsttätig erkennt oder die Sonde 2 wird manuell von der Sondenlanze 3 getrennt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Sondenführung (1) zum Führen einer Sonde (2), die Sondenführung (1) umfassend
- eine Sondenlanze (3) mit einem Sondenhalter (11) für die Sonde (2) und einem geraden Verfahrabschnitt (7), und
- eine Verfahreinheit (5) zum Verfahren der Sondenlanze (3),
- wobei die Verfahreinheit (5) eine Antriebseinheit (17) zum Verschieben des Verfahrabschnitts (7) relativ zu der Verfahreinheit (5) entlang einer Längsachse des Verfahrabschnitts (7) aufweist,
- die Verfahreinheit (5) eine mit einem Roboterarm (38) eines Industrieroboters (30) mechanisch verbindbare Schnittstelle (19) aufweist,
- die Sondenlanze (3) eine an einem Sondenhalterende des Sondenhalters (11) angeordnete Kontakteinheit (13) mit elektrischen Kontakten zum Kontaktieren einer Sensorik der Sonde (2) aufweist,
- durch die Sondenlanze (3) elektrische Signalleitungen zu den elektrischen Kontakten der Kontakteinheit (13) geführt sind, **dadurch gekennzeichnet, dass**
- die elektrischen Kontakte der Kontakteinheit (13) über die Schnittstelle (19) elektrisch mit dem Industrieroboter (30) verbindbar sind.

2. Sondenführung (1) nach Anspruch 1,
**dadurch gekennzeichnet, dass** die Verfahreinheit (5) eine Halterung (15) aufweist, in der der Verfahrabschnitt (7) geführt ist.

3. Sondenführung (1) nach Anspruch 1 oder 2,
**dadurch gekennzeichnet, dass** die Antriebseinheit (17) einen Antrieb (21) zum Verschieben des Verfahrabschnitts (7) aufweist.

4. Sondenführung (1) nach Anspruch 3,
**dadurch gekennzeichnet, dass** die Antriebseinheit (17) einen Mechanismus zur Umwandlung einer rotatorischen Bewegung des Antriebs (21) in eine translatorische Bewegung des Verfahrabschnitts (7) aufweist.

5. Sondenführung (1) nach einem der vorhergehenden Ansprüche, **dadurch gekennzeichnet, dass** die Kontakteinheit (13) lösbar mit dem Sondenhalterende verbunden ist.

6. Sondenführung (1) nach einem der vorhergehenden Ansprüche, **dadurch gekennzeichnet, dass** der Sondenhalter (11) lösbar mit einem Mittelabschnitt (9) der Sondenlanze (3) verbunden ist.

7. Sondenführung (1) nach Anspruch 6 ,
**dadurch gekennzeichnet, dass** der Mittelabschnitt (9) lösbar mit dem Verfahrabschnitt (7) der Sondenlanze (3) verbunden ist.

8. Sondenführung (1) nach einem der vorhergehenden Ansprüche, **dadurch gekennzeichnet, dass** die Schnittstelle (19) zur Befestigung an einem Flansch (40) des Roboterarms (38) ausgebildet ist.

9. Industrieroboter (30) zum automatisierten Einführen einer Sonde (2) in ein metallurgisches Gefäß (32) und Ausführen der Sonde (2) aus dem metallurgischen Gefäß (32), der Industrieroboter (30) umfassend
- einen bewegbaren Roboterarm (38), und
- eine Sondenführung (1) gemäß einem der vorhergehenden Ansprüche,
- wobei die Schnittstelle (19) der Verfahreinheit (5) der Sondenführung (1) mit dem Roboterarm (38) verbunden ist.

10. Industrieroboter (30) nach Anspruch 9,
**dadurch gekennzeichnet, dass** die Verfahreinheit (5) der Sondenführung (1) durch den Industrieroboter (30) ansteuerbar ist.

11. Verfahren zum automatisierten Einführen einer Sonde (2) in ein metallurgisches Gefäß (32) und Ausführen der Sonde (2) aus dem metallurgischen Gefäß (32) mit einem gemäß einem der Ansprüche 9 oder 10 ausgebildeten Industrieroboter (30), wobei
- die Sondenlanze (3) von dem Industrieroboter (30) zu der Sonde (2) bewegt wird,
- der Sondenhalter (11) mit der Sonde (2) verbunden wird,
- die Sondenlanze (3) mit der Sonde (2) von dem Industrieroboter (30) zu dem metallurgischen Gefäß (32) bewegt wird,
- die Sonde (2) an der Sondenlanze (3) von dem Industrieroboter (30) in das metallurgische Gefäß (32) eingeführt wird, wobei der gerade Verfahrabschnitt (7) mittels der Antriebseinheit (17) relativ zu der Verfahreinheit (5) entlang einer Längsachse des Verfahrabschnitts (7) verschoben wird und zu dem metallurgischen Gefäß (32) hin verfahren wird,
- und die Sonde (2) an der Sondenlanze (3) von dem Industrieroboter (30) aus dem metallurgischen Gefäß (32) herausgeführt wird, wobei der gerade Verfahrabschnitt (7) mittels der der Antriebseinheit (17) relativ zu der Verfahreinheit (5) entlang einer Längsachse des Verfahrabschnitts (7) verschoben wird und von dem metallurgischen Gefäß (32) weg verfahren wird.

## Claims

1. Probe guide (1) for guiding a probe (2), the probe guide (1) comprising
- a probe lance (3) with a probe holder (11) for the probe (2) and a straight moving section (7), and
- a moving unit (5) for moving the probe lance (3),
- wherein the moving unit (5) has a drive unit (17) for displacing the moving section (7) in relation to the moving unit (5) along a longitudinal axis of the moving section (7),
- the moving unit (5) has an interface (19), which can be mechanically connected to a robotic arm (38) of an industrial robot (30),
- the probe lance (3) has a contact unit (13), which is arranged at a probe holder end of the probe holder (11) and has electrical contacts intended for contacting a sensor system of the probe (2),
- electrical signal lines are led through the probe lance (2) to the electrical contacts of the contact unit (13), **characterized in that**
- the electrical contacts of the contact unit (13) can be electrically connected to the industrial robot (30) via the interface (19).

2. Probe guide (1) according to Claim 1,
**characterized in that** the moving unit (5) has a mount (15), in which the moving section (7) is guided.

3. Probe guide (1) according to Claim 1 or 2,
**characterized in that** the drive unit (17) has a drive (21) for displacing the moving section (7).

4. Probe guide (1) according to Claim 3,
**characterized in that** the drive unit (17) has a mechanism for transforming a rotational movement of the drive (21) into a translational movement of the moving section (7).

5. Probe guide (1) according to one of the preceding claims, **characterized in that** the contact unit (13) is detachably connected to the probe holder end.

6. Probe guide (1) according to one of the preceding claims, **characterized in that** the probe holder (11) is detachably connected to a middle section (9) of the probe lance (3).

7. Probe guide (1) according to Claim 6,
**characterized in that** the middle section (9) is detachably connected to the moving section (7) of the probe lance (3).

8. Probe guide (1) according to one of the preceding claims, **characterized in that** the interface (19) is designed for fastening to a flange (40) of the robotic arm (38).

9. Industrial robot (30) for automatically introducing a probe (2) into a metallurgical vessel (32) and extracting the probe (2) from the metallurgical vessel (32), the industrial robot (30) comprising
- a movable robotic arm (38), and
- a probe guide (1) according to one of the preceding claims,
- wherein the interface (19) of the moving unit (5) of the probe guide (1) is connected to the robotic arm (38).

10. Industrial robot (30) according to Claim 9,
**characterized in that** the moving unit (5) of the probe guide (1) can be activated by the industrial robot (30).

11. Method for automatically introducing a probe (2) into a metallurgical vessel (32) and extracting the probe (2) from the metallurgical vessel (32) with an industrial robot (30) designed according to either of Claims 9 and 10, wherein
- the probe lance (3) is moved by the industrial robot (30) towards the probe (2),
- the probe holder (11) is connected to the probe (2),
- the probe lance (3) with the probe (2) is moved by the industrial robot (30) towards the metallurgical vessel (32),
- the probe (2) on the probe lance (3) is introduced by the industrial robot (30) into the metallurgical vessel (32), wherein the straight moving section (7) is displaced by means of the drive unit (17) in relation to the moving unit (5) along a longitudinal axis of the moving section (7) and is moved towards the metallurgical vessel (32),
- and the probe (2) on the probe lance (3) is extracted by the industrial robot (30) from the metallurgical vessel (32), wherein the straight moving section (7) is displaced by means of the drive unit (17) towards the moving unit (5) along a longitudinal axis of the moving section (7) and is moved away from the metallurgical vessel (32).

## Revendications

1. Guide de sonde (1) destiné à guider une sonde (2), le guide de sonde (1) comprenant :
- une lance de sonde (3) comprenant un porte-sonde (11) pour la sonde (2) et une partie mobile (7) droite, et
- une unité de déplacement (5) permettant le déplacement de la lance de sonde (3),
- dans lequel l'unité de déplacement (5) comprend une unité d'entraînement (17) permettant de déplacer la partie mobile (7) par rapport à l'unité de déplacement (5) le long d'un axe longitudinal de la partie mobile (7),
- l'unité de déplacement (5) comprend une interface (19) pouvant être reliée mécaniquement à un bras robotisé (38) d'un robot industriel (30),
- la lance de sonde (3) comprend une unité de contact (13) située au niveau d'une extrémité de porte-sonde du porte-sonde (11) et pourvue de contacts électriques permettant une mise en contact avec un ensemble de capteurs de la sonde (2),
- des câbles de signalisation électrique sont guidés vers les contacts électriques de l'unité de contact (13) à travers la lance de sonde (3),
**caractérisé en ce que**
- les contacts électriques de l'unité de contact (13) peuvent être reliés électriquement au robot industriel (30) par l'intermédiaire de l'interface (19).

2. Guide de sonde (1) selon la revendication 1,
**caractérisé en ce que** l'unité de déplacement (5) comprend un support (15) dans lequel la partie mobile (7) est guidée.

3. Guide de sonde (1) selon la revendication 1 ou 2, **caractérisé en ce que** l'unité d'entraînement (17) comprend un entraînement (21) permettant de déplacer la partie mobile (7) .

4. Guide de sonde (1) selon la revendication 3,
**caractérisé en ce que** l'unité d'entraînement (17) comprend un mécanisme permettant de transformer un mouvement de rotation de l'entraînement (21) en un mouvement de translation de la partie mobile (7).

5. Guide de sonde (1) selon l'une des revendications précédentes,
**caractérisé en ce que** l'unité de contact (13) est reliée de manière détachable à l'extrémité de porte-sonde.

6. Guide de sonde (1) selon l'une des revendications précédentes,
**caractérisé en ce que** le porte-sonde (11) est relié de manière détachable à une partie intermédiaire (9) de la lance de sonde (3).

7. Guide de sonde (1) selon la revendication 6,
**caractérisé en ce que** la partie intermédiaire (9) est reliée de manière détachable à la partie mobile (7) de la lance de sonde (3).

8. Guide de sonde (1) selon l'une des revendications précédentes,
**caractérisé en ce que** l'interface (19) est conçue pour être fixée sur une bride (40) du bras robotisé (38).

9. Robot industriel (30) destiné à l'introduction automatisée d'une sonde (2) dans un récipient métallurgique (32) et au retrait de la sonde (2) hors du récipient métallurgique (32), le robot industriel (30) comprenant
- un bras robotisé (38) mobile, et
- un guide de sonde (1) selon l'une des revendications précédentes,
- dans lequel l'interface (19) de l'unité de déplacement (5) du guide de sonde (1) est reliée au bras robotisé (38).

10. Robot industriel (30) selon la revendication 9,
**caractérisé en ce que** l'unité de déplacement (5) du guide de sonde (1) peut être commandée par le robot industriel (30) .

11. Procédé pour l'introduction automatisée d'une sonde (2) dans un récipient métallurgique (32) et le retrait de la sonde (2) hors du récipient métallurgique (32) avec un robot industriel (30) exécuté selon l'une des revendications 9 ou 10, dans lequel
- la lance de sonde (3) est déplacée vers la sonde (2) par le robot industriel (30),
- le porte-sonde (11) est relié à la sonde (2),
- la lance de sonde (3) avec la sonde (2) est déplacée vers le récipient métallurgique (32) par le robot industriel (30),
- la sonde (2) sur la lance de sonde (3) est introduite dans le récipient métallurgique (32) par le robot industriel (30), la partie mobile (7) droite étant déplacée par rapport à l'unité de déplacement (5) le long d'un axe longitudinal de la partie mobile (7) au moyen de l'unité d'entraînement (17) et étant amenée vers le récipient métallurgique (32),
- et la sonde (2) sur la lance de sonde (3) est retirée hors du récipient métallurgique (32) par le robot industriel (30), la partie mobile (7) droite étant déplacée par rapport à l'unité de déplacement (5) le long d'un axe longitudinal de la partie mobile (7) au moyen de l'unité d'entraînement (17) et étant éloignée du récipient métallurgique (32).
